# EUROPÄISCHE PATENTANMELDUNG

(11) **EP 3 406 819 A1**
(43) Veröffentlichungstag der Anmeldung: **28.11.2018**
(21) Anmeldenummer: 18000469.9
(22) Anmeldetag: 18.05.2018
(51) Int. Cl.: E04D 15/04, B29C 65/14, B29C 65/02, B29C 35/16

(54) **VERFAHREN UND VORRICHTUNG ZUM THERMISCHEN VERBINDEN VON ABDICHTUNGSBAHNEN UND -STREIFEN**

(30) Priorität: 23.05.2017 DE 102017004943; 21.07.2017 DE 102017006939
(71) Anmelder: Marzouki, Taieb, 27321 Thedinghausen (DE)
(72) Erfinder: Marzouki, Taieb, 27321 Thedinghausen (DE)
(74) Vertreter: Möller, Friedrich

(57) **Zusammenfassung**

Zur thermischen Verbindung von Abdichtungsbahnen (13) bzw. Abdichtungsstreifen (16) ist es bislang üblich, die thermisch zu verbindenden Flächen der Abdichtungsbahn (13) und/oder Abdichtungsstreifen (16) mit offenen Flammen aus gasbeheizten Brennern oder Heißluft aus Heißlufterzeugern thermisch aufzuheizen. Ein solches Aufheizen erfolgt unkontrolliert. Es kann daher zu Fehlstellungen kommen. Außerdem führen offene Flammen von Gasbrennern zu einer erhöhten Brandgefahr.

Die Erfindung sieht es vor, die zu verbindenden Abdichtungsbahnen (13) und/oder Abdichtungsstreifen (16) durch mindestens einen Infrarotstrahler einer handgeführten Heizdüse (20) thermisch aufzuweichen, wobei der mindestens eine Infrarotstrahler zur Erzeugung einer hohen Energiedichte durch Bündelung von Infrarotstrahlen (30) ausgebildet ist. Auf diese Weise kann ein gezieltes effizientes thermisches Erweichen der miteinander thermisch zu verbindenden Flächen der Abdichtungsbahnen (13) und/oder Abdichtungsstreifen (16) ohne jegliche Brandgefahr erfolgen.

## Beschreibung

Die Erfindung betrifft eine Vorrichtung zum thermischen Verbinden von Abdichtungsbahnen und -streifen gemäß dem Oberbegriff des Anspruchs 1. Des Weiteren betrifft die Erfindung ein Verfahren zum thermischen Verbinden von Abdichtungsbahnen und -streifen gemäß dem Oberbegriff des Anspruchs 11.

Bauwerksabdichtungen für vorwiegend Dächer, Brücken, Böden, Wände oder dergleichen werden üblicherweise mittels vorzugsweise bituminöser Abdichtungsbahnen und -streifen gebildet. Dabei werden mehrere übereinanderliegende oder mit Überlappung nebeneinanderliegende Abdichtungsbahnen zur Bildung einer großflächigen Abdichtung thermisch miteinander verbunden durch insbesondere Verschweißen und/oder Verschmelzen. Beim thermischen Verbinden der Abdichtungsbahnen bzw. -streifen durch Verschmelzen wird auch von einem Verkleben gesprochen. In vorstehend beschriebener Weise werden auch sogenannte Detailabdichtungen an Bauwerksrändern, Attiken, Schornsteinen oder dergleichen gebildet.

Für das thermische Verbinden der Abdichtungsbahnen und/oder -streifen werden die miteinander zu verbindenden Flächen der Abdichtungsbahnen und/oder -streifen mittels entsprechender Energiequellen aufgeheizt bzw. erwärmt und dadurch soweit angeschmolzen oder erweicht, dass die miteinander thermisch zu verbindenden Flächen zumindest verbindungsseitig mindestens klebrig, vorzugsweise erweicht und/oder zähflüssig werden.

Es ist bekannt, Abdichtungsbahnen und -streifen mit Gasbrennern oder Heißluft thermisch zu verbinden. Dabei geht ein Großteil der Energie verloren. Die Flammen und die Heißluftströmung sind schwer kontrollierbar, was ein unvollständiges thermisches Aufheizen der Abdichtungsbahnen und -streifen und dadurch Fehlstellungen zur Folge haben kann. Schließlich führen durch Gasbrenner erzeugte offene Flammen zu einer erheblichen Brandgefahr.

Der Erfindung liegt die Aufgabe zugrunde, ein Verfahren und eine Vorrichtung zum thermischen Verbinden von Abdichtungsbahnen und/oder -streifen zu schaffen, womit eine sichere zuverlässige und energiesparende thermische Verbindung, vorzugsweise Verschweißen, Verschmelzen und/oder Verklebung, der Abdichtungsbahnen und/oder -streifen auch bei Detailabdichtungen an Bauwerken gewährleistet ist.

Eine Vorrichtung zur Lösung dieser Aufgabe weist die Merkmale des Anspruchs 1 auf. Bei dieser Vorrichtung ist wenigstens ein Infrarotstrahler zur Erzeugung von Infrarotstrahlung hoher Energiedichte vorgesehen. Es handelt sich hierbei um eine Infrarotstrahlung (IR-Strahlung) mit hoher Konzentration und/oder starker Bündelung. Die konzentrierte Infrarotstrahlung wird an den zu verbindenden Stellen mindestens größtenteils absorbiert und dadurch die zu verbindenden Stellen von der Infrarotstrahlung hochwirksam erwärmt und erweicht. Dadurch ist es möglich, mit dem mindestens einen Infrarotstrahler ohne eine offene Flamme eine ausreichende Erwärmung bzw. Aufheizung der zu verbindenden Stellen der Abdichtbahnen und/oder -streifen herbeizuführen. Außerdem sind stark gebündelte Infrarotstrahlen witterungs- und windunempfindlich.

Bei der Infrarotstrahlung handelt es sich um bevorzugt kurzwellige Infrarotstrahlung (nahes Infrarot) mit einer Wellenlänge im Bereich von 0,8 µm bis 3 µm oder mittelwellige Infrarotstrahlung (mittleres Infrarot) mit einer Wellenlänge im Bereich von 3 µm bis 50 µm. Es werden also vom mindestens einen Infrarotstrahler bevorzugt Infrarotstrahlen mit einer Wellenlänge im Bereich von 0,8 µm bis 50 µm erzeugt. Mikrowellenstrahlungen mit einer solchen Wellenlänge eignen sich besonders zum wirksamen Erwärmen und/oder Anschmelzen von dunklen, insbesondere schwarzen, Flächen, wodurch sich bituminöse Abdichtungsbahnen und/oder -streifen auszeichnen.

Vorzugsweise wird die Infrarotstrahlung hoher Energiedichte durch eine Konzentration, insbesondere Bündelung und/oder Verdichtung der vom mindestens einen Infrarotstrahler erzeugten Infrarotstrahlen herbeigeführt.

Bevorzugt weist die Vorrichtung mehrere auf engstem Raum dicht beieinanderliegend angeordnete Infrarotstrahler und/oder Infrarotheizelemente auf. Durch die dichte Anordnung der Infrarotstrahler bzw. Infrarotheizelemente, vorzugsweise Infrarotquellen, wird eine komprimierte bzw. konzentrierte Infrarotstrahlung hoher Energie und/oder Leistungsdichte erzeugt. Vorzugsweise entsteht durch die komprimierte Anordnung mehrerer Infrarotstrahler und/oder einer Vielzahl von Infrarotheizelementen zur Bildung des jeweiligen Infrarotstrahlers eine stark gebündelte Infrarotstrahlung und/oder eine düsenartige, bevorzugt düsenartig fokussierte, Infrarotstrahlung. Dadurch ist auf engstem Raum ein großer Energieeintrag in das aufzuheizende Material der thermisch zu verbindenden Abdichtungsbahnen und/oder -streifen möglich.

Infolge der auf engstem Raum gebündelten Infrarotstrahlung und/oder dicht beieinanderliegender Infrarotstrahler kann es während des Betriebs der Vorrichtung, insbesondere wenn diese über eine längere Zeit ununterbrochen betrieben wird, zu einer Aufheizung des mindestens einen Infrarotstrahlers kommen. Deswegen kann bei einer bevorzugten Ausgestaltung der Vorrichtung eine Kühlung vorgesehen sein, beispielsweise mittels mindestens eines Lüfters. Der Lüfter erzeugt eine am mindestens einen Infrarotstrahler vorbeifließende Luftströmung. Die Luft nimmt bei ihrem Weg am Infrarotstrahler vorbei Wärme von demselben mit und führt so zu einer wirksamen Kühlung.

Vorteilhafterweise ist jedem Infrarotstrahler oder zumindest ausgewählten Infrarotstrahlern jeweils ein Reflektor zugeordnet. Die Reflektoren des jeweiligen Infrarotstrahlers sind so zueinander ausgerichtet, dass sie die Infrarotstrahlung komprimieren und/oder düsenartig verdichten. Beispielsweise können die Reflektoren so angeordnet sein, dass sie dicht beieinanderliegende, parallel zueinander verlaufende Infrarotstrahlen erzeugen. Der jeweilige Infrarotstrahler gibt dann ein bevorzugt gleichmäßiges Array dicht beieinanderliegender, vorzugsweise paralleler, Infrarotstrahlen ab.

Bei einer bevorzugten Ausgestaltung der Vorrichtung ist es vorgesehen, dem mindestens einen Infrarotheizelement und/oder der wenigstens einen Infrarotquelle und gegebenenfalls dem diesem zugeordneten Reflektor jedes Infrarotstrahlers in mindestens einem gemeinsamen für Infrarotstrahlung durchlässigen Hüllkörper aus vorzugsweise Glas anzuordnen. Das jeweilige empfindliche Infrarotheizelement ist dadurch mechanisch gegen äußere Umwelteinflüsse geschützt, wobei die Strahlungsdurchlässigkeit des Hüllkörpers zu keinen nennenswerten Leistungseinbußen der Infrarotstrahler führt. Indem auch die Reflektoren im strahlungsdurchlässigen Hüllkörper, bevorzugt einem Röhrchen, angeordnet sind, ist auch ein Schutz der Reflektoren gewährleistet. Gegebenenfalls können die Reflektoren durch partielle Bedampfung solcher Stellen des strahlungsdurchlässigen Hüllkörpers oder Röhrchens gebildet sein, die auf der der Strahlungsaustrittsrichtung gegenüberliegenden Seite des jeweiligen Infrarotstrahlers angeordnet sind.

Eine Möglichkeit der Ausgestaltung der Vorrichtung sieht es vor, den jeweiligen Infrarotstrahler spiralartig mit dicht beieinanderliegenden Wendeln auszubilden. Dadurch entsteht ein Infrarotspiralstahler. Bevorzugt verfügt der Infrarotstrahler dann über wenigstens ein spiralartig gewendeltes Röhrchen aus vorzugsweise Glas, das für die Infrarotstrahlen durchlässig ist. Die Wendel eines solchen Röhrchens liegen bevorzugt dicht nebeneinander oder gegebenenfalls auch aneinander. Solche Infrarotstrahler erzeugen stark gebündelte Infrarotstrahlen, so dass der jeweilige Infrarotstrahler die erforderliche hohe Energiedichte und/oder komprimierte Energiestrahlen erzeugen kann.

Bei einer anderen Ausgestaltungsmöglichkeit der Vorrichtung sind die Infrarotstrahler und die ihnen gegebenenfalls zugeordneten Reflektoren mäanderartig mit dicht beieinanderliegenden oder gegebenenfalls auch aneinanderliegenden, vorzugsweise geradlinigen Abschnitten gruppiert, insbesondere in mindestens einem entsprechen verlaufenden bzw. geformten und für Infrarotstrahlen durchlässigen Hüllkörper. Dadurch ist auch das Röhrchen mäanderartig geformt. Durch die dicht beieinanderliegenden oder sich sogar gegebenenfalls berührenden Abschnitte des Röhrchens lassen sich in demselben auf engstem Raum viele Infrarotheizelemente einschließlich der diesem gegebenenfalls zugeordneten Reflektoren unterbringen. Dadurch ist gewährleistet, dass der jeweilige Infrarotstrahler eine Art Bündel dicht beieinanderliegender, räumlich konzentrierter Infrarotstrahlen erzeugt, was zu einem hochwirksamen thermischen Verbinden der Abdichtungsbahnen und/oder -streifen führt.

Eine andere Möglichkeit der Ausbildung der Vorrichtung sieht es vor, mehrere Infrarot-heizstrahler und die diesen gegebenenfalls zugeordneten Reflektoren dicht gedrängt in eng nebeneinander- und/oder übereinanderliegenden Reihen anzuordnen. Dabei ist jeder Reihe mehrerer aufeinanderfolgender Infrarotheizelemente und/oder Infrarotquellen ein eigenes für Infrarotstrahlung durchlässiges Röhrchen aus vorzugsweise Glas, beispielsweise Quarzglas, zugeordnet. Es können auch in jeder Reihe mehrere, vorzugsweise zwei, tandemartig zusammenhängende, aber getrennte Hohlräume aufweisende Röhrchen mit jeweils mindestens einem eigenen Infrarotheizelement samt einem diesem zugeordneten Reflektor im Inneren vorgesehen sein. Bei dieser Ausführungsform der Infrarotstrahler sind also mehrere dicht nebeneinanderliegende beidseitig geschlossene Röhrchen oder sonstige Hüllkörper vorgesehen. Die dicht nebeneinanderliegenden oder gegebenenfalls aneinanderliegenden Röhrchen jeder Reihe aufeinanderfolgender Infrarotheizelemente und gegebenenfalls Reflektoren sind zusammengeschaltet, insbesondere elektrisch zusammengeschaltet. Dies kann in einer Reihenschaltung, aber auch alternativ oder kombiniert mit einer Parallelschaltung geschehen. Auch solche Infrarot-Heizstrahler dienen der effektiven Erzeugung von Infrarotstrahlung hoher Energiedichte durch stark gebündelte Energiestrahlen.

Die vorstehend beschriebenen Infrarotstrahler erzeugen durch ihre spiralartige bzw. mäanderartige und oder tandemartige Ausbildung eine hocheffiziente Infrarotstrahlung hoher Energiedichte durch gebündelte, dicht beieinanderliegende Infrarotstrahlen.

Eine vorteilhafte Weiterbildungsmöglichkeit der Vorrichtung sieht es vor, den wenigstens einen Infrarotstrahler in einem mindestens teilweise strahlungsundurchlässigen Gehäuse anzuordnen. Vorzugsweise ist das Gehäuse so ausgebildet, dass es eine seitliche Wärmeabstrahlung größtenteils abschirmt und nur einen einseitig ungehinderten Durchlass von Infrarotstrahlung zulässt. Insbesondere ist das Gehäuse einseitig für Infrarotstrahlung offen, indem das Gehäuse eine Durchgangsöffnung für die IR-Strahlung aufweist. Durch diese Durchtrittsöffnung kann die im Gehäuse vom mindestens einen Infrarotstrahler erzeugte Infrarotstrahlung zentriert und gebündelt, vorzugsweise düsenartig, aus dem Gehäuse austreten und dadurch gezielt gerichtet auf mindestens eine Stelle bzw. Fläche der zu verbindenden Abdichtungsbahnen bzw, -streifen auftreffen. Das begünstigt ein wirksames Erweichen der beiden zu verbindenden Flächen zur thermischen Verschmelzung, Verschweißung und/oder Verklebung der zu verbindenden Abdichtungsbahnen und/oder -streifen.

Das Gehäuse kann gegebenenfalls zum Kühlen des mindestens einen darin angeordneten Infrarotstrahlers dienen. Zu diesem Zweck ist das Gehäuse bevorzugt gekühlt. Beispielsweise kann das Gehäuse insbesondere außenseitig eine Vielzahl von Rippen aufweisen, die die Abstrahlungsfläche des Gehäuses erhöhen und dadurch zu einem eine intensive Kühlung hervorrufenden Luft- und/oder Wärmeaustausch führen. Es ist aber auch denkbar, ein gekühltes Gehäuse dadurch zu realisieren, dass dieses im Inneren hohl ist oder Kühlkanäle aufweist. Durch das hohle Innere und/oder die Kühlkanäle kann dann entweder Luft, vor allem gekühlte Luft, oder auch eine Kühlflüssigkeit geleitet werden. Das führt zu einer besonders intensiven Kühlung des Gehäuses und dadurch eine wirksame Kühlung des mindestens einen Infrarotstrahlers innerhalb des Gehäuses.

Es ist möglich, der offenen Seite des Gehäuses, insbesondere der Durchtrittsöffnung derselben, eine gegebenenfalls lösbare für die Infrarotstrahlung durchlässige Abdeckung, insbesondere eine Deckscheibe, zuzuordnen. Die Deckscheibe ist bevorzugt aus transparentem Glas, insbesondere transparentem Quarzglas, gebildet. Durch eine solche Abdeckscheibe ist nicht nur der mindestens eine Infrarotstrahler im Gehäuse gegen äußere Einflüsse geschützt; es wird auch wirksam verhindert, dass irgendwelche Gegenstände oder Körperteile mit dem mindestens einen Infrarotstrahler im Gehäuse in Berührung kommen und dadurch Schaden nehmen könnten.

Eine bevorzugte Vorrichtung zeichnet sich durch eine Ausgestaltung desselben als handgeführte Heizdüse aus. Eine solche Vorrichtung kann auch als handgeführte Heiz- oder Schweißpistole bezeichnet werden. Die handgeführte Heizdüse eignet sich besonders zur manuellen Herstellung von Detailabdichtungen an Bauwerken wie zum Beispiel Dachrändern, Attiken, Brückenanschlüsse oder dergleichen. Die Heizdüse ermöglicht einen düsenartig gebündelten und/oder konzentrierten Austritt von durch wenigstens einen Infrarot-Heizstrahler in insbesondere einem Gehäuse erzeugten Infrarotstrahlen.

Bevorzugt verfügt die handgeführte Heizdüse über einen an einem Ende des Gehäuses mit dem wenigstens einen darin angeordneten Infrarotstrahler angeordneten Führungsstab oder ein Führungsrohr. An einem dem Gehäuse gegenüberliegenden Ende des Führungsstabs oder -rohrs ist vorzugsweise ein Handgriff mit mindestens einem Betätigungsmittel für den wenigstens einen IR-Strahler vorgesehen. Der Handgriff ermöglicht es, die Vorrichtung manuell gezielt zu handhaben, vorzugsweise zu führen. Mit dem wenigstens einen Betätigungsmittel, das beispielsweise als ein Schalter ausgebildet ist, kann vom Handgriff aus der mindestens eine Infrarotstrahler der Vorrichtung bedarfsweise ein- und ausgeschaltet werden.

Ein Verfahren zur Lösung der eingangs genannten Aufgabe weist die Maßnahmen des Anspruchs 11 auf. Bei diesem Verfahren ist es vorgesehen, Abdichtungsbahnen und/oder -streifen mit mindestens einer Beschichtung aus einem leicht oder leichter erweichbaren Material, vorzugsweise bituminösem Material, durch Infrarotstrahlung hoher Energiedichte thermisch zu erhitzen und dadurch zu erweichen. Weil das Material der Beschichtung bei geringerer Temperatur erweichbarer ist als das vorzugsweise auch bituminöse Kern- bzw. Grundmaterial der thermisch zu verbindenden Abdichtungsbahnen und/oder -streifen, lassen sich diese besonders vorteilhaft und wirksam mit konzentrierter und/oder komprimierter Infrarotstrahlung durch thermisches Erhitzen erweichen, und zwar ohne größeren Zeitaufwand im Vergleich zu bisher üblichen Gasbrennern mit offener Flamme bzw. Heißluft.

Als Material für die Bildung der mindestens teilweisen Beschichtung der thermisch zu verbindenden Abdichtungsbahnen und/oder -streifen kommt vorzugsweise wärmeaktivierbares Selbstklebebitumen in Betracht. Bevorzugt ist dieses wärmeaktivierbare Selbstklebebitumen aus einem elastomer-modifizierten Bitumen gebildet. Dieses lässt sich nach kurzer thermischer Beeinflussung, insbesondere Erhitzen, soweit erweichen, dass eine wirksame Verbindung der thermisch zu verbindenden Abdichtungsbahnen und/ oder -streifen im Bereich der Beschichtung oder Beschichtungen durch Verschweißen, Verschmelzen und/oder Verkleben gewährleistet ist.

Die mindestens eine Beschichtung der Abdichtungsbahnen und/oder -streifen wird gebildet durch eine mindestens teilweise Beschichtung mindestens einer Fläche der jeweiligen Abdichtungsbahnen bzw. des Abdichtungsstreifens und einer über die ganze gegenüberliegende andere Fläche der jeweiligen Abdichtungsbahn oder des jeweiligen Abdichtungsstreifens verteilte, mindestens partielle Beschichtung einer anderen Fläche. Solche Beschichtungen sind ausreichend, um an allen beliebigen Stellen die Abdichtungsbahnen und/oder -streifen unter Verwendung mindestens eines Infrarotstrahlers hoher Energiedichte thermisch zu verbinden durch Überlappungsnähte, aber auch die gesamte Fläche beispielsweise übereinanderliegender Abdichtungsbahnen oder -streifen.

Gemäß einer vorteilhaften Ausgestaltung des Verfahrens ist es vorgesehen, das thermische Erhitzen mindestens eines Teils der Beschichtung oder der Beschichtungen der thermisch zu verbindenden Abdichtungsbahnen und/oder -streifen mit einer wenigstens einen Infrarotstrahler zur Erzeugung von Infrarotstrahlung hoher Energiedichte, insbesondere hoher Leistung auf kleinster Fläche, aufweisende handgeführte Heizdüse vorzunehmen. Diese Heizdüse ist bevorzugt nach mindestens einem der Ansprüche 1 bis 10 ausgebildet.

Das erfindungsgemäße Verfahren eignet sich besonders für das manuelle thermische Verbinden von Abdichtungsbahnen und/oder -streifen mit handgeführten Heizdüsen, die über mindestens einen Infrarotstrahler verfügen, womit ein Aufweichen mindestens einer Beschichtung aus einem vorzugsweise kaltselbstklebenden, bituminösen Material auf mindestens einer Seite einer der zu verbindenden Abdichtungsbahnen und/oder -streifen erfolgt. Bei Abdichtungsbahnen und/oder -streifen mit solchen Beschichtungen ist das thermische Verbinden der Abdichtungsbahnen und/oder -streifen unter Zuhilfenahme mindestens eines kompakten Infrarotstrahlers mit hoher Energiedichte und/oder komprimierten, stark gebündelten Infrarotstrahlen, besonders vorteilhaft, weil dieses Material schon bei vergleichsweise niedrigen Temperaturen im Bereich von 100° bis 120° ausreichend thermisch erweichbar ist.

Bevorzugte Ausführungsbeispiele der Erfindung werden nachfolgend anhand der Zeichnung näher erläutert. In dieser zeigen:
- Fig. 1: einen schematischen Querschnitt durch eine Flachdachabdeckung im Bereich eines Lüftungsrohrs,
- Fig. 2: eine schematische Darstellung eines Randbereichs einer Dachabdeckung im Bereich einer Attika,
- Fig. 3: einen Querschnitt durch eine Überlappungsnaht zweier Randbereiche benachbarter Abdichtungsbahnen,

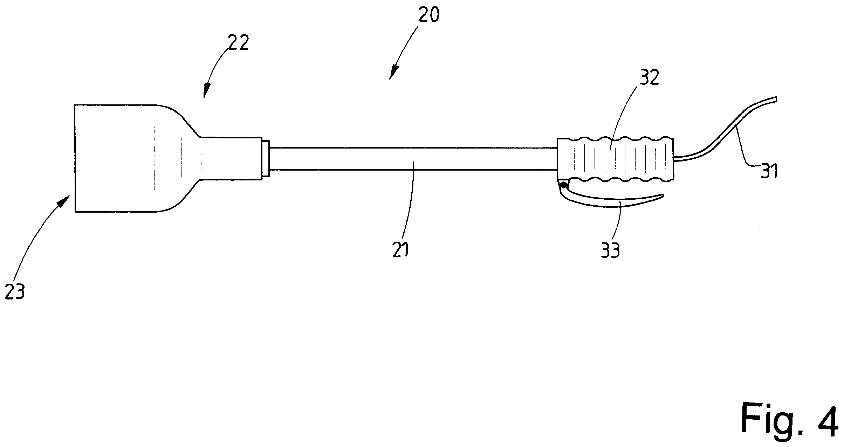

- Fig. 4: eine Seitenansicht einer als handgeführte Heizdüse ausgebildeten Vorrichtung,
- Fig. 5: einen Längsschnitt durch ein Gehäuse eines Infrarotstrahlers der Vorrichtung der Fig. 4,
- Fig. 6: eine Ansicht in das vorne offene Gehäuse der Vorrichtung der Fig. 5 auf einem darin angeordneten Infrarotstrahler,
- Fig. 7: ein alternatives Ausführungsbeispiel eines Infrarotstrahlers in einem im Querschnitt viereckigen Gehäuse,
- Fig. 8: ein weiteres alternatives Ausführungsbeispiel eines Infrarotstrahlers,
- Fig. 9: einen Querschnitt durch das Gehäuse der Vorrichtung mit einem darin angeordneten Infrarotstrahler und einer für Infrarotstrahlen durchlässigen Abdeckung vor dem vorne offenen Gehäuses,
- Fig. 10: ein alternatives Ausführungsbeispiel der Vorrichtung in einer Darstellung anlog zur Fig. 6, und
- Fig. 11: eine weitere alternative Ausgestaltungsmöglichkeit der Vorrichtung in einer Darstellung analog zur Fig. 7.

Die Erfindung eignet sich besonders zum thermischen Verbinden, insbesondere Verschmelzen, Verschweißen und/oder Verkleben, von Abdichtungsbahnen und -streifen an Bauwerken wie zum Beispiel Dächern oder Brücken. Besonders eignet sich die Erfindung für Detailabdichtungen an bevorzugt den zuvor genannten Bauwerken.

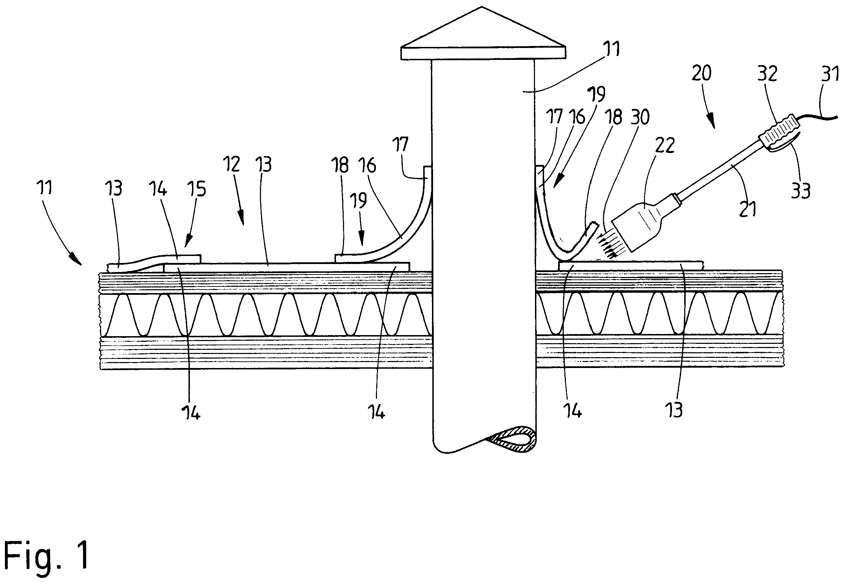

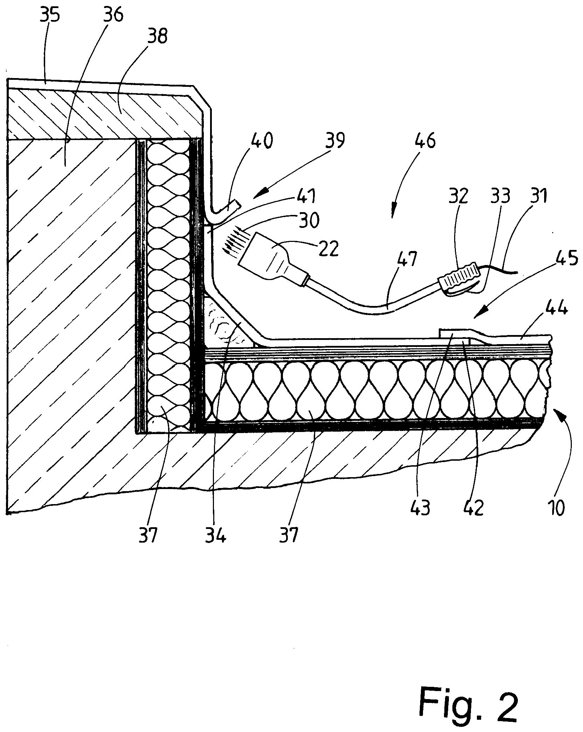

Die Fig. 1 und 2 veranschaulichen prinzipiell zwei denkbare Anwendungsfälle der Erfindung. Die Erfindung ist hierauf aber nicht beschränkt. Es ist vielmehr eine Fülle anderer Anwendungsfälle denkbar.

Die Fig. 1 zeigt schematisch einen Querschnitt durch ein Dach, insbesondere ein Flachdach 10, eines Gebäudes im Bereich eines sich durch das Flachdach 10 hindurch nach außen erstreckenden oberen Endes eines Lüftungsrohrs 11 oder eines Schornsteins. Das offene obere Ende des Lüftungsrohrs 11 trägt eine Abdeckung 12.

Auf dem Flachdach 11 ist eine Dachabdichtung aus mit Abstand nebeneinander angeordneten bituminösen Abdichtungsbahnen 13 verlegt. In der Fig. 1 sind nur einige Abdichtungsbahnen 13 in der Nähe des Lüftungsrohrs 11 dargestellt. Gegebenenfalls kann die Dachabdichtung zweischichtig aus zwei übereinander mit Versatz angeordneten und sich vollständig überlappenden Abdichtungsbahnen 13, und zwar einer Unterlagsbahn und einer Oberlagsbahn, gebildet sein.

Die mit Abstand nebeneinander verlegten Abdichtungsbahnen 13 überlappen einander mit benachbarten Randstreifen 14. Die sich überlappenden Randstreifen 14 benachbarter Abdichtungsbahnen 13 sind im Bereich einer Überlappungsnaht 15 thermisch miteinander verbunden.

Um das Lüftungsrohr 11 herum ist ein Abdichtungsstreifen 16 vorgesehen. Der Abdichtungsstreifen 16 umgibt das Lüftungsrohr 11 vollständig, vorzugsweise mit überlappenden Enden. Es ist aber auch denkbar, mehrere kurze Abdichtungsstreifen 16 aufeinanderfolgend um das Lüftungsrohr 11 herum anzuordnen. Der Abdichtungsstreifen 16 ist im Querschnitt gesehen bogenförmig, vorzugsweise entlang eines 90°-Bogens, um das Lüftungsrohr 11 herumgeführt bzw. herumgewickelt. Ein aufrechter Randstreifen 17 des Abdichtungsstreifens 16 ist mit dem Lüftungsrohr 11 außenseitig verbunden. Ein anderer, etwa horizontaler Randstreifen 18 des Abdichtungsstreifens 16 ist im Bereich einer Überlappungsnaht 19 mit der das Lüftungsrohr 11 mit geringem Abstand umgebenden einzigen Abdichtungsbahn 13 oder auch mehreren Abdichtungsbahnen 13 verbunden. Die Verbindung des Randstreifens 18 des Abdichtungsstreifens 16 mit der Abdichtungsbahn 13 oder den Abdichtungsbahnen 13 erfolgt thermisch. Je nach Material des Lüftungsrohrs 11 kann die Verbindung des anderen, vertikalen Randstreifens 17 des Abdichtungsstreifens 16 mit dem äußeren Umfang des Lüftungsrohrs 11 ebenfalls thermisch erfolgen.

Die thermische Verbindung der Abdichtungsbahnen 13 untereinander und des mindestens einen Abdichtungsstreifens 16 mit wenigstens einer Abdichtungsbahn 13 erfolgt mit einer handgeführten Vorrichtung, die Wärme bzw. Heizenergie zum thermischen Aktivieren der zu verbindenden Flächen oder Flächenbereiche der Abdichtungsbahnen 13 und/oder Abdichtungsstreifen 16 mittels Infrarotstrahlen erzeugt. Es werden von einer solchen Vorrichtung Infrarotstrahlen hoher Energiedichte erzeugt. Das heißt, die Infrarotstrahlen erzeugen eine große Heizleistung auf einer vergleichsweise kleinen Fläche, indem sie konzentriert, komprimiert und/oder gebündelt sind. Dadurch können die Infrarotstrahlen der Vorrichtung gezielt gerichtet und genau positionierbar, vorzugsweise düsenartig, die zu verschweißenden Stellen der Abdichtungsbahn 13 und/oder Abdichtungsstreifen 16 thermisch aufheizen und dabei mindestens so weit erweichen, dass eine zuverlässige thermische Verbindung geschaffen wird.

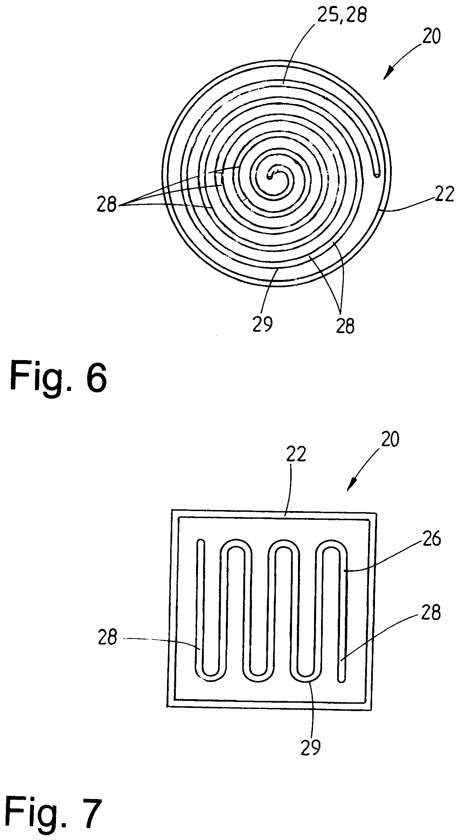

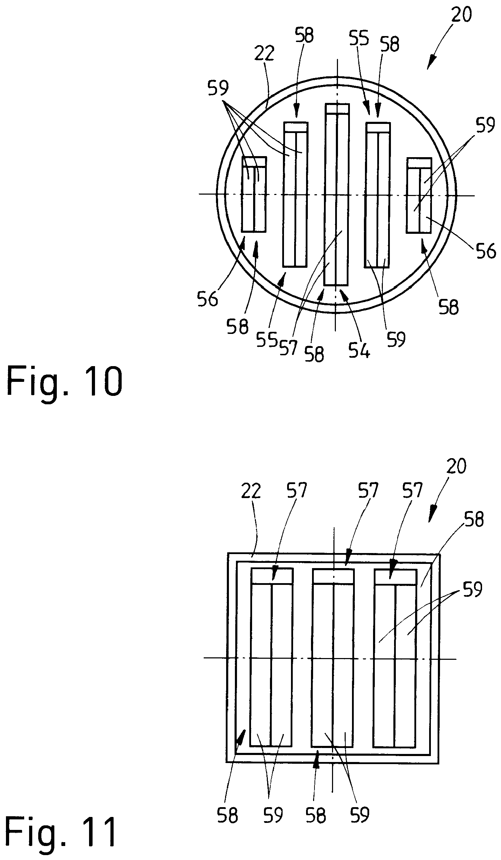

Die in der Fig. 1 gezeigte Vorrichtung ist als eine handgeführte Vorrichtung ausgebildet, vorzugsweise als handgeführte Heizdüse 20. Bevorzugt ist die Heizdüse 20 nach Art einer Heizpistole bzw. Schweißpistole ausgebildet. Die Heizdüse 20 verfügt über einen länglichen Führungsstab 21, der im Ausführungsbeispiel der Fig. 1 gerade ausgebildet ist. Bevorzugt ist der Führungsstab 21 rohrartig ausgebildet zur Hindurchführung von Energieversorung-, Steuerungs- und/oder Messkabeln. An einem zu den thermisch zu verbindenden Abdichtungsbahnen 13 bzw. Abdichtungsstreifen 16 gerichteten Ende des Führungsstabs 21 ist ein Gehäuse 22 vorgesehen. Bevorzugt ist dieses fest mit dem betreffenden Ende des Führungsstabs 21 verbunden. Ein im Durchmesser erweiterter vorderer Teil des Gehäuses 22 ist zylindrisch (Fig. 6, 8 und 10) oder viereckig (Fig. 7 und 11) ausgebildet. Aber auch andere Gehäusequerschnitte, beispielsweise ovale Querschnitte, sind denkbar.

Das Gehäuse 22 kann gegebenenfalls gekühlt sein. Alternativ oder zusätzlich ist es denkbar, dem Gehäuse 22 eine Kühlung zuzuordnen. Bevorzugt handelt es sich bei solchen Kühlungen um einen Ventilator.

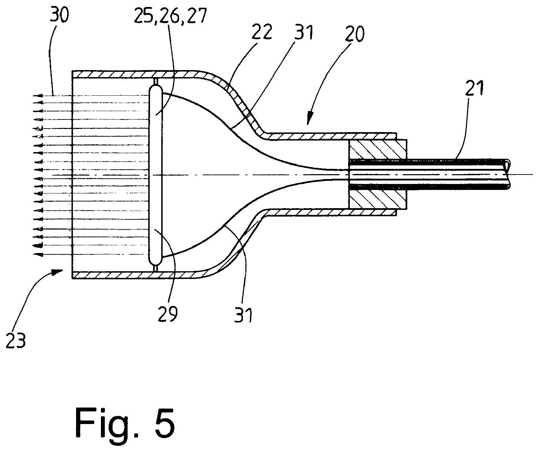

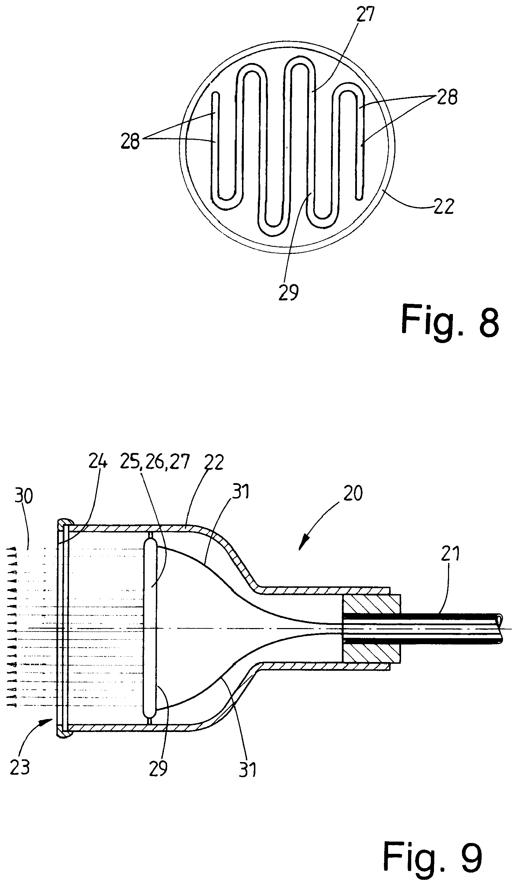

An der zur thermisch aufzuheizenden Stelle weisenden Seite ist das Gehäuse 22 mit einer vollflächigen Durchtrittsöffnung 23 versehen, die bei zylindrischen Gehäusen 22 kreisförmig ist und bei viereckigen Gehäusen 22 viereckig. Beim Ausführungsbeispiel der Fig. 5 ist die Durchtrittsöffnung 23 vollständig offen, also unverschlossen. Hingegen ist im Ausführungsbeispiel der Fig. 9 die Durchtrittsöffnung 23 des Gehäuses 22 mit einer für Infrarotstrahlen durchlässigen Abdeckung versehen, wobei es sich vorzugsweise um eine Deckscheibe 24 aus klarsichtigem, farblosen Glas wie insbesondere Quarzglas handelt. Die Deckscheibe 24 ist bevorzugt lösbar am die Durchtrittsöffnung 23 umgebenden vorderen Rand des Gehäuses 22 angeordnet.

Im Inneren des gegebenenfalls gekühlten oder kühlbaren Gehäuses 22 befindet sich bei den gezeigten Ausführungsbeispielen (Fig. 6 bis 8) jeweils ein einziger Infrarotstrahler. Jeder Infrarotstrahler kann über eine Vielzahl von vorzugsweise zusammenhängenden Infrarotheizelementen 28 und/oder Infrarotquellen verfügen, die auf engstem Raum dicht nebeneinanderliegend und/oder aufeinanderfolgend angeordnet und somit räumlich konzentriert sind. Die in den Fig. 6 bis 8 angedeuteten Abstände sind nur zum Zwecke der anschaulichen Darstellungen relativ groß. In der Praxis werden die Abstände sehr viel geringer sein.

Der in der Fig. 6 gezeigte Infrarotstrahler 25 ist als Infrarotspiralstrahler ausgebildet. Die Fig. 7 zeigt einen mäanderförmig ausgebildeten Infrarotstrahler 26 mit nebeneinanderliegenden Reihen bzw. Schenkeln. Dadurch ist dieser Infrarotstrahler 26 in einem viereckigen Gehäuse 22 unterbringbar. Die Fig. 8 zeigt auch einen mäanderförmigen Infrarotstrahler 27, jedoch mit unterschiedlich langen Reihen bzw. Schenkeln zur platzsparenden Unterbringung des Infrarotstrahlers 27 in einem kreisförmigen Gehäuse 22.

Die Infrarotstrahler 25, 26, 27 verfügen über ein einziges, durchgehendes spiralartig geformtes oder mäanderartig geformtes Röhrchen 29, das mindestens in Austrittsrichtung der Infrarotstrahlen 30 mit vorzugsweise einer Wellenlänge im Bereich von 0,8 µm bis 3 µm, also kurz oder mittelwellige Infrarotstrahlen 30, zum Gehäuse 22 für Infrarotstrahlung durchlässig ausgebildet ist. Bevorzugt ist das Röhrchen 29 aus Klarglas wie zum Beispiel farbloses, klarsichtiges bzw. transparentes Quarzglas gebildet. In dem Röhrchen 29 sind entweder nur ein einziges Infrarotheizelement 28 bzw. nur eine einzige Infrarotquelle oder dicht beieinander mehrere Infrarotheizelemente 28, vorzugsweise Infrarotquellen, des jeweiligen Infrarotstrahlers 25, 26, 27 in Reihe hintereinander und/oder vorzugsweise parallel nebeneinander angeordnet.

Die elektrische Stromversorgung erfolgt bei mehreren Infrarotheizelementen 28 nach dem Prinzip der elektrischen Reihenschaltung oder gegebenenfalls einer Parallelschaltung bzw. kombinierter Reihen- und Parallelschaltung. Demzufolge ist jeweils mindestens ein elektrischer Leiter 31 durch jedes der beiden Enden des Röhrchens 29 vorzugsweise elektrisch isoliert hindurchgeführt. (Fig. 5 und 9).

Die Infrarotheizelemente 28 hängen zusammen. Der Begriff "Infrarotheizelement 28" wurde nur gewählt, um zu verdeutlichen, dass im jeweiligen Röhrchen 29 mindestens eine Infrarotquelle angeordnet ist, indem bevorzugt das jeweilige Infrarotheizelement 28 die Infrarotquelle darstellt und Ausführungsbeispiele denkbar sind, bei denen mehrere Infrarotheizelemente 28 und somit mehrere Infrarotquellen den jeweiligen Infrarotstrahler bilden oder auch nur ein einziges Infrarotheizelement 28 bzw. nur eine einzige Infrarotquelle einen Infrarotstrahler bildet.

Bevorzugt ist jedem Infrarotheizelement 28 oder allen Infrarotheizelementen 28 bzw. jeder Infrarotquelle oder allen infrarotquellen des jeweiligen Infrarotstrahlers 25, 26, 27 ein in den Figuren nicht dargestellter Reflektor zugeordnet. Es kann sich beim Reflektor um ein separates Bauteil dicht hinter dem oder jedem Infrarotheizelement 28 bzw. Infrarotquelle handeln. Denkbar ist es aber auch, den Reflektor aus einer bevorzugt innenseitigen Beschichtung aus einem hochreflektiven Material, beispielsweise einer silbrigen oder goldenen partiellen Bedampfung der Innenseite des Röhrchens 29, zu bilden. Diese vorzugsweise durch Bedampfung gebildete Beschichtung befindet sich an einer solchen Stelle des Röhrchens 29, die der Austrittsrichtung der Infrarotstrahlen 30 aus dem Röhrchen 29 und/oder Gehäuse 22 gegenüberliegt und somit hinter den Infrarotheizelementen 28, insbesondere der mindestens einen Infrarotquelle, im jeweiligen Röhrchen 29 vorgesehen ist.

Der mäanderförmige Verlauf der in den Fig. 7 und 8 gezeigten Infrarotstrahler 26, 27 kann gemäß den Darstellungen in den Fig. 10 und 11 auch durch mehrere nebeneinanderliegende und gegebenenfalls zusätzlich oder alternativ aufeinanderfolgende separate Infrarotstrahler 54 bis 57 in den Umrissen des kreisrunden (Fig. 10), viereckigen (Fig. 11) oder einen sonstigen Querschnitt aufweisenden Gehäuses 22 gebildet sein.

Die Infrarotstrahler 54 bis 57 können beispielsweise durch einen Duo- oder Quattrostrahler realisiert werden, der in einem einzigen Röhrchen 58 mit einem Hohlraum oder mehreren zwei zusammenhängenden Teilröhrchen mit getrennten Hohlräumen und zwei oder mehr als zwei parallel verlaufende, nebeneinanderliegende Infrarotquellen, beispielsweise Infrarotheizelemente 59, aufweist. Die Infrarotheizelemente 59 bzw. Infrarotquellen im jeweiligen Röhrchen 58 sind an einem Ende des Röhrchens 58 elektrisch zusammengeschaltet, so dass elektrisch die nebeneinanderliegenden Infrarotheizelemente 59, insbesondere Infrarotquellen, des jeweiligen Infrarotstrahlers 54 bis 57 elektrisch parallel geschaltet sind.

Beim Ausführungsbeispiel der Fig. 10 mit einem kreisrunden Gehäuse 22 sind fünf Infrarotstrahler 54, 55, 56 im jeweils einen vorzugsweise zwei parallele, getrennte Hohlräume mit Infrarotheizelementen 59 bzw. Infrarotquellen aufweisenden Röhrchen 58 angeordnet, und zwar ein einziger mittiger langer Infrarotstrahler 54, auf beiden Seiten desselben kürzere Infrarotstrahler 55 und auf beiden Seiten der kürzeren Infrarotstrahler 55 noch kürzere Infrarotstrahler 56.

Beim Ausführungsbeispiel der Fig. 11 sind drei gleiche Infrarotstrahler 57 in einem viereckigen Gehäuse 22 untergebracht, Auch die Infrarotstrahler 57 verfügen über ein Röhrchen 58 zur Aufnahme zweier paralleler, separater Infrarotheizelemente bzw. Infrarotquellen und/oder zwei separate Hohlräume, die aus zwei parallelen zusammenhängenden Teilröhrchen mit jeweils einem Infrarotheizelement 28 bzw. einer Infrarotquelle gebildet sind. Am Ende des jeweiligen Röhrchens 58 sind die Infrarotheizelemente 28 bzw. Infrarotquellen elektrisch verbunden zu einer Parallelschaltung.

In den Fig. 10 und 11 sind Duostrahler mit jeweils zwei parallel nebeneinanderliegenden Infrarotheizelementen 28 bzw. Infrarotquellen in einem Röhrchen 28 aus zwei zusammenhängenden Teilröhrchen mit jeweils einem eigenen Hohlraum zur Aufnahme jeweils mindestens eines Infrarotheizelements 28 bzw. Infrarotquelle dargestellt. Es ist alternativ denkbar, im runden oder viereckigen Gehäuse 22 Quattroinfrarotstrahler mit drei oder vier parallelen Hohlräumen im Röhrchen unterzubringen, und zwar in gleicher oder analoger Anordnung, wie das in den Fig. 10 und 11 dargestellt ist.

Dem Gehäuse 22 kann erforderlichenfalls mindestens ein Ventilator zur Kühlung, vorzugsweise Luftkühlung, des wenigstens einen Infrarotstrahlers 25, 26, 27, 54, 55, 56 oder 57 im Gehäuse 22 zugeordnet sein.

Das dem Gehäuse 26 gegenüberliegende Ende des Führungsstabs 21 der Vorrichtung ist mit einem Handgriff 32 versehen oder es ist ein solcher Handgriff 32 am dem Gehäuse 22 gegenüberliegenden Ende des Führungsstabs 21 befestigt.

Dem Handgriff 32 ist mindestens ein Betätigungsmittel zugeordnet. Das vorzugsweise manuell betätigbare Betätigungsmittel dient mindestens zum bedarfsweisen Ein- und Ausschalten des jeweiligen Infrarotstrahlers 25, 26, 27, 54, 55, 56 oder 57 im Gehäuse 22 der Vorrichtung. Bei der gezeigten Vorrichtung ist das Betätigungsmittel als ein im Bereich des Handgriffs 32 an demselben schwenkbar angeordneter Schalthebel 33 ausgebildet. Es sind aber auch Druckknöpfe oder andere Schalter zur Herstellung und Stromversorgung des jeweiligen Infrarotstrahlers 25, 26, 27, 54, 55, 56 oder 57 und Unterbrechung der Stromversorgung denkbar.

Der Vorrichtung kann auch eine Temperaturmesseinrichtung, beispielsweise ein Pyrometer, zugeordnet sein. Ein Messsensor dieser Temperaturmesseinrichtung kann im Gehäuse 22 oder auch außerhalb desselben angeordnet sein, und zwar so, dass er in Austrittsrichtung der Infrarotstrahlen 30, vorzugsweise parallel dazu, auf die Stelle gerichtet ist, auf die die Infrarotstrahlen 30 auf die thermisch zu erweichenden Flächen oder Stellen der zu verbindenden Abdichtungsbahnen 13 und/oder Abdichtungsstreifen 16 treffen. Dadurch ist gezielt die Temperatur an der Verbindungsstelle ermittelbar. Dem Bediener der Vorrichtung kann dann die jeweils gemessene Temperatur auf einer Anzeige, vorzugsweise am oder in der Nähe des Handgriffs 32, angezeigt werden. Auch ist eine Steuerung oder Regelung der von den Infrarotstrahlen 30 an der Verbindungsstelle erzeugten Temperatur denkbar. Dann befindet sich an der Vorrichtung, vorzugsweise in der Nähe ihres Handgriffs 32, ein Mittel zum Einstellen und Verändern der gewünschten Temperatur an der Verbindungsstelle der thermisch zu verbindenden Abdichtungsbahnen 13 und/oder Abdichtungsstreifen 16.

Die Fig. 2 zeigt die thermische Verbindung von Abdichtungsbahnen 34 und Abdichtungsstreifen 35 im Attikabereich. Das Flachdach 10 ist hier an mindestens einer Außenwand von einer Erhöhung 36 umgeben. Das Flachdach 10 und die Innenseite der Erhöhung 36 sind mit einer Dämmung 37 versehen. Auf der Erhöhung 36 befindet sich eine Abdeckung 38.

Ein innerer Eckbereich zwischen dem Flachdach 10 und der Erhöhung 36 ist von einer äußeren Abdichtungsbahn 34 überdeckt bzw. seitlich bedeckt. Diese Abdichtungsbahn 34 ist im Winkel geführt. Darüber befindet sich der Abdichtungsstreifen 35, der sich von der Innenseite der Erhöhung 36 über die Abdeckung 38 hinweg erstreckt. Benachbarte Randstreifen 40, 41 der Abdichtungsbahn 34 und des Abdichtungsstreifens 35 überlappen einander im Bereich einer Überlappungsnaht 39 und sind dort thermisch miteinander verbunden. Eine weitere Überlappungsnaht 45 befindet sich am gegenüberliegenden Randstreifen 42 der Abdichtungsbahn 34, der von einem Randstreifen 43 einer benachbarten Abdichtungsbahn 44 überlappt ist.

Zur Herstellung der Überlappungsnaht 39 an der Detailabdichtung zwischen der Abdichtungsbahn 34 und dem Abdichtungsstreifen 35 der Erhöhung 36 und/oder der Überlappungsnaht 45 dient auch hier eine handgeführte Heizdüse 46 bzw. eine Schweißpistole. Diese unterscheidet sich von der Heizdüse 20 nur durch einen abgewinkelten Führungsstab 47. Im Übrigen entspricht die als Heizdüse 46 der zuvor beschriebenen Heizdüse 20. Auf die vorstehende Beschreibung dieser Heizdüse 20 wird Bezug genommen und es werden für gleiche Teile der Heizdüse 46 die Bezugsziffern der Heizdüse 20 verwendet.

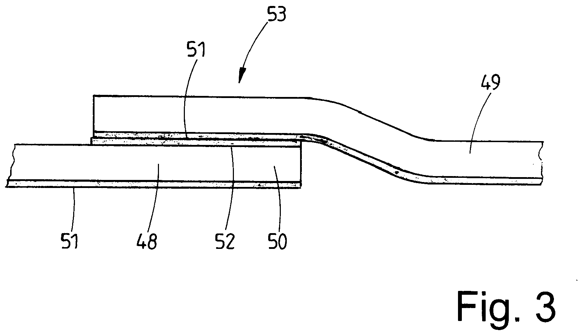

Für die thermische Verbindung von Abdichtungsbahnen 13, 34, 44 und Abdichtungsstreifen 16, 35 mittels komprimierter düsenartig gebündelter Infrarotstrahlen 30 aus handgeführten Vorrichtungen, insbesondere den Heizdüsen 20 und 46, eignen sich besonders die in der Fig. 3 gezeigten Abdichtungsbahnen 48 und 49. Das heißt, die Abdichtungsbahnen 13, 34 und 44 sowie Abdichtungsstreifen 16, 35 der Fig. 1 und 2 können wie die Abdichtungsbahnen 48 und 49 der Fig. 3 ausgebildet sein.

Die Abdichtungsbahnen 48 und 49 sind bevorzugt gleich ausgebildet. Demnach ist die gesamte Unterseite jeder Abdichtungsbahn 48, 49 mit einer Beschichtung 51 versehen. Die Beschichtung 51 erstreckt sich über die gesamte Unterseite jeder Abdichtungsbahn 48 und 49, und zwar vorzugsweise nicht vollflächig, sondern in Form paralleler mit Abstand nebeneinanderliegender Streifen oder einem sonstigen gleichmäßigen, beispielsweise rasterartigen, Muster. Es wäre auch denkbar, die gesamte Unterseite der Abdichtungsbahn 48 und 49 mit einer vollflächigen Beschichtung 51 zu versehen.

Die Oberseite jeder Abdichtungsbahn 48, 49 ist nur im Bereich eines längslaufenden Randstreifens 50 mit einer Beschichtung 52 versehen. Diese Beschichtung 52 kann sich vollflächig über dem Randstreifen 50 der Abdichtungsbahn 48 und 49 erstrecken, aber auch partiell, indem die obere Beschichtung 52 von mit Abstand parallel nebeneinander verlaufenden Streifen oder einem sonstigen vorzugsweise rasterartigen Muster gebildet ist.

Durch die im Bereich der in der Fig. 3 gezeigte Überlappungsnaht 53 benachbarter, übereinanderliegender Randstreifen der benachbarten Abdichtungsbahn 48 und 49 kommen im Bereich der Überlappungsnaht 53 nur die sich im Bereich des unteren Randstreifens 50 der Abdichtungsbahn 48 vorgesehene, oberseitige Beschichtung 52 und die Beschichtung 51 der Unterseite der Abdichtungsbahn 49 im Bereich der Überlappungsnaht 53 miteinander zur Anlage (Fig. 3). Die thermische Verbindung der Abdichtungsbahnen 48 und 49 im Bereich der Überlappungsnaht 53 erfolgt dann zwischen den Beschichtungen 51 und 52.

Vor der Bildung der Überlappungsnaht 53 sind die freiliegenden Flächen der Beschichtungen 51, 52 bevorzugt durch eine in den Figuren nicht gezeigte Folie abgedeckt. Diese dünne Folie mit einer Dicke von beispielsweise unter 1/10 mm, ist bevorzugt aus leicht-schmelzendem Polyethylen oder Polypropylen gebildet. Die Schutzfolie verhindert ein Verkleben der Beschichtung 51, 52 untereinander bzw. mit dem Grundmaterial der Abdichtungsbahn 38, 49, wenn diese für den Transport zu einer Rolle aufgerollt ist.

Sowohl die Beschichtung 51, 52 als auch die die Beschichtung 51, 52 aufweisenden Abdichtungsbahnen bzw. Abdichtungsstreifen im Übrigen bestehen aus bituminösen Material. Jedoch unterscheidet sich das bituminöse Material der Beschichtungen 51, 52 vom bituminösen Grundmaterial der Abdichtungsbahnen und/oder Abdichtungsstreifen dadurch, dass das bituminöse Material der Beschichtungen 51, 52 leichter erweichbar ist. Bevorzugt weist deshalb das Material der Beschichtungen 51, 52 einen niedrigeren Schmelzpunkt auf als das Grundmaterial der Abdichtungsbahn und/oder Abdichtungsstreifen. Das bituminöse Material der Beschichtungen 51, 52 ist vorzugsweise aus wärmeaktivierbaren Selbstklebebitumen und/oder elastomer-modifizierten Bitumen gebildet. Diese sind mit vergleichsweise geringer Wärmeenergie erweichbar und/oder anschmelz- bzw. aufschmelzbar. Mit anderen Worten dienen die Beschichtungen 51, 52 der Abdichtungsbahn und/oder Abdichtungsstreifen dazu, diese mit weniger Energie und/ oder in kürzerer Zeit thermisch zu verbinden durch Erweichen bzw. Anschmelzen und anschließendes Zusammendrücken zum Verschmelzen, Verschweißen und/oder Verkleben der zusammengedrückten Flächen der thermisch zu verbindenden Abdichtungsbahnen und/oder Abdichtungsstreifen.

Das erfindungsgemäße Verfahren zeichnet sich durch eine besondere Art der thermischen Verbindung von Abdichtungsbahnen und -streifen aus. Demnach werden gezielt Abdichtungsbahnen und/oder Abdichtungsstreifen mit Beschichtungen 51, 52 aus leichtem bzw. bei geringerer Temperatur erweichbarem bituminösen Material, vorzugsweise bituminösem kaltselbstklebenden Material, durch Infrarotstrahlung hoher Energiedichte erweicht. Dazu werden beide Abdichtungsbahnen und/oder Abdichtungsstreifen an ihren die Beschichtungen 51, 52 aufweisenden, zu verbindenden Stellen mit Infrarotstrahlung hoher Energiedichte und/oder komprimierten Infrarotstrahlen 30 thermisch erweicht. Dadurch, dass die Abdichtungsbahnen und/oder Abdichtungsstreifen mindestens dort, wo die thermische Verbindung erfolgen soll, mit Beschichtungen 51, 52 versehen sind, dessen Material leichter erweichbar ist als das Grundmaterial der Abdichtungsbahnen und/oder Abdichtungsstreifen, ist eine wirksame thermische Verbindung, insbesondere Verklebung und/oder Verschmelzung, mit konzentrierten und/oder komprimierten Infrarotstrahlen 30 besonders zuverlässig und gefahrlos möglich.

Das thermische Verbinden von Beschichtungen 51, 52 aus leichter thermisch erweichbares bituminöses Material, vorzugsweise bituminöses kaltselbstklebendes Material, aufweisenden Abdichtungsbahnen und/oder Abdichtungsstreifen erfolgt besonders vorteilhaft mit handgeführten Heizdüsen, die Infrarotstrahler aufweisen und ausgebildet sind zur Erzielung von Infrarotstrahlung hoher Energiedichte. Insbesondere erzeugen die Heizdüsen eine stark komprimierte bzw. annähernd fokussierte Infrarotstrahlung mit dicht beieinanderliegenden Infrarotstrahlen 30. Die konzentrierte Infrarotstrahlung 25 wird deshalb von den Heizdüsen quasi düsenartig konzentriert und/oder komprimiert auf die thermisch und durch Kleben zu verbindenden Stellen geleitet. Dabei begünstigt das durch konzentrierte Infrarotstrahlung erfolgende Erweichen des Materials der Beschichtungen 51, 52 die Klebewirkung der Kaltselbstklebeeigenschaften aufweisenden Beschichtungen 51, 52.

Wie die Fig. 1 und 2 verdeutlichen, werden die zu verbindenden Randstreifen der Abdichtungsbahnen und/oder -streifen gleichzeitig oder gemeinsam vom mindestens einen gleichen Infrarotstrahler 25, 26, 27, 54, 55, 56, 57 der Heizdüse 20 bzw. 46 thermisch erhitzt und dabei die zu verbindenden Flächen erweicht.

Zum Verbinden der Abdichtungsbahnen 13 und/oder der Abdichtungsstreifen, insbesondere zum Zwecke der Herstellung von Detailabdichtungen und/oder Überlappungsnähten, wird zunächst ein Randstreifen einer der zu verbindenden Abdichtungsbahnen und/oder Abdichtungsstreifen von der Verbindungsstelle etwas abgeklappt, vorzugsweise um 45° bis 180°, so wie es in den Fig. 1 und 2 dargestellt ist. Dadurch können gleichzeitig beide miteinander zu verbindenden Teilflächen bzw. Randstreifen der Abdichtungsbahnen und/oder Abdichtungsstreifen durch konzentrierte Infrarotstrahlung thermisch erwärmt und/oder erweicht werden.

Die von den Heizdüsen 20, 46 auf die zu verbindenden Stellen der Abdichtungsbahnen und/oder Abdichtungsstreifen gerichtete konzentrierte Infrarotstrahlung dient bei den mit Schutzfolien überdeckten Beschichtungen 51 und 52 dazu, zunächst die Schutzfolien thermisch zu beseitigen, insbesondere wegzuschmelzen, bevor die konzentrierte Infrarotstrahlung das bituminöse Material, vorzugsweise das kaltselbstklebende bituminöse Material, der Beschichtungen 51, 52 zur Verbesserung der Klebewirkung des kaltselbstklebenden Materials zusätzlich thermisch aufweicht.

Nach dem thermischen Erweichen der zu verbindenden Teilflächen bzw. Randstreifen der Abdichtungsbahnen und/oder Abdichtungsstreifen durch konzentrierte Infrarotstrahlung hoher Energiedichte wird der Randstreifen 18 bzw. 40 oder die Teilfläche einer Abdichtungsbahn bzw. eines Abdichtungsstreifens gegen den Randstreifen 14 der Abdichtungsbahn bzw. anderen Abdichtungsbahnen geklappt und die Randstreifen bevorzugt zusammengedrückt. Das kann mit verhältnismäßig geringer Andruckkraft geschehen. Hierbei kommt es zum Verkleben der zusammenliegenden Verbindungsflächen aufgrund ihrer Beschichtungen 51, 52 aus kaltselbstklebendem bituminösen Material und auch zum Verschmelzen dieser Stellen durch das thermische Erweichen derselben durch Infrarotstrahlen hoher Energiedichte.

Bei Abdichtungsbahnen und -streifen, die mit keiner Beschichtung 51, 52 aus einem kaltselbstklebenden Material versehen sind, erfolgt das Verbinden der Randstreifen allein durch ein Verschmelzen bzw. Verschweißen des von den Infrarotstrahlen hoher Energiedichte thermisch erweichten bituminösen Grundmaterials der Abdichtungsbahnen und/ oder -streifen.

**Bezugszeichenliste:**

| | | | |
|---|---|---|---|
| 10 | Flachdach | 36 | Erhöhung |
| 11 | Lüftungsrohr | 37 | Dämmung |
| 12 | Abdeckung | 38 | Abdeckung |
| 13 | Abdichtungsbahn | 39 | Überlappungsnaht |
| 14 | Randstreifen | 40 | Randstreifen |
| 15 | Überlappungsnaht | 41 | Randstreifen |
| 16 | Abdichtungsstreifen | 42 | Randstreifen |
| 17 | Randstreifen | 43 | Randstreifen |
| 18 | Randstreifen | 44 | Abdichtungsbahn |
| 19 | Überlappungsnaht | 45 | Überlappungsnaht |
| 20 | Heizdüse | 46 | Heizdüse |
| 21 | Führungsstab | 47 | Führungsstab |
| 22 | Gehäuse | 48 | Abdichtungsbahn |
| 23 | Durchtrittsöffnung | 49 | Abdichtungsbahn |
| 24 | Deckscheibe | 50 | Randstreifen |
| 25 | Infrarotstrahler | 51 | Beschichtung |
| 26 | Infrarotstrahler | 52 | Beschichtung |
| 27 | Infrarotstrahler | 53 | Überlappungsnaht |
| 28 | Infrarotheizelement | 54 | Infrarotstrahler |
| 29 | Röhrchen | 55 | Infrarotstrahler |
| 30 | Infrarotstrahl | 56 | Infrarotstrahler |
| 31 | elektrischer Leiter | 57 | Infrarotstrahler |
| 32 | Handgriff | 58 | Röhrchen |
| 33 | Schalthebel | 59 | Infrarotheizelement |
| 34 | Abdichtungsbahn | | |
| 35 | Abdichtungsstreifen | | |

## Patentansprüche

1. Vorrichtung zum thermischen Verbinden von Abdichtungsbahnen (13, 34, 44) und oder Abdichtungsstreifen (16, 35), vorzugsweise für Detailabdichtungen an Bauwerken, mit einer wenigstens einen Strahler aufweisenden Heizeinrichtung, **dadurch gekennzeichnet, dass** der wenigstens eine Strahler als Infrarotstrahler (25, 26, 27; 54, 55, 56, 57) zur Erzeugung von Infrarotstrahlung hoher Energiedichte ausgebildet ist.

2. Vorrichtung nach Anspruch 1, **dadurch gekennzeichnet, dass** der mindestens eine Infrarotstrahler (25, 26, 27; 54, 55, 56, 57) mindestens ein Infrarotheizelement (28; 59) und/oder wenigstens eine Infrarotquelle aufweist, dem ein Reflektor zugeordnet ist.

3. Vorrichtung nach Anspruch 1 oder 2, **dadurch gekennzeichnet, dass** das mindestens eine Infrarotheizelement (28, 59) bzw. die wenigstens eine Infrarotquelle und gegebenenfalls der mindestens eine diesem zugeordnete Reflektor in mindestens einem für Infrarotstrahlung durchlässigen Hültkörper, vorzugsweise einem Röhrchen (29; 58) aus insbesondere Glas, angeordnet ist.

4. Vorrichtung nach einem der vorhergehenden Ansprüche, **dadurch gekennzeichnet, dass** der Infrarotstrahler (25) spiralartig ausgebildet ist, insbesondere mindestens ein spiralartig gewendeltes Röhrchen (29) mit dicht nebeneinanderliegenden oder aneinanderliegenden Wendeln aufweist, in dem das mindestens eine Infrarotheizelement (28) bzw. die wenigstens eine Infrarotquelle und der diesen zugeordnete Reflektor angeordnet sind.

5. Vorrichtung nach einem oder mehreren der Ansprüche 1 bis 3, **dadurch gekennzeichnet, dass** der Infrarotstrahler (26, 27) mäanderartig mit dicht beieinanderliegenden, vorzugsweise geradlinigen, Abschnitten oder Reihen ausgebildet ist, insbesondere in einem einen entsprechenden Verlauf aufweisenden strahlungsdurchlässigen Röhrchen (29), worin das mindestens eine Infrarotheizelement (28) bzw. die wenigstens eine Infrarotquelle und der diesen zugeordnete Reflektor angeordnet sind.

6. Vorrichtung nach einem der vorhergehenden Ansprüche, **dadurch gekennzeichnet, dass** mehrere Infrarotstrahler (54, 55, 56, 57) in eng über- oder nebeneinanderliegenden Reihen angeordnet sind, wobei vorzugsweise die Infrarotstrahler (54, 55, 56, 57) jeder Reihe ein strahlungsdurchlässiges und an beiden Stirnseiten geschlossenes Röhrchen (58) oder Mehrfachröhrchen aufweist und/oder die nebeneinanderliegenden Reihen jeweils eines Infrarotstrahlers (54, 55, 56, 57) elektrisch zusammengestaltet sind, vorzugsweise in Reihe und/oder parallel.

7. Vorrichtung nach einem der vorhergehenden Ansprüche, **dadurch gekennzeichnet, dass** der wenigstens eine Infrarotstrahler (25, 26, 27; 54, 55, 56, 57) in einem vorzugsweise seitliche Wärmeabstrahlung mindestens größtenteils abschirmenden und/ oder einseitig zum ungehinderten Durchlass von Infrarotstrahlen (30) offenen und gegebenenfalls kühlbaren Gehäuse (22) angeordnet ist, das vorzugsweise eine Durchtrittsöffnung (23) für Infrarotstrahlen (30) aufweist.

8. Vorrichtung nach Anspruch 7, **dadurch gekennzeichnet, dass** der Öffnung des Gehäuses (22), vorzugsweise der Durchtrittsöffnung (23) desselben, eine gegebenenfalls lösbare für Infrarotstrahlen (30) durchlässige Abdeckung, beispielsweise eine Deckscheibe (24), zugeordnet ist.

9. Vorrichtung nach einem der vorhergehenden Ansprüche, **gekennzeichnet durch** eine Ausgestaltung als handgeführte Heizeinrichtung, vorzugsweise Heizdüse (20, 46), zum gebündelten und/oder konzentrierten, insbesondere düsenartig gebündelten und/ oder konzentrierten, Austritt der vom wenigstens einen Infrarotstrahler (25, 26, 27) erzeugten Infrarotstrahlen (30) kurzer und/oder mittlerer Wellenlänge aus dem Gehäuse (22).

10. Vorrichtung nach Anspruch 9, **dadurch gekennzeichnet, dass** die handgeführte Heizdüse (20, 46) einen Führungsstab (21, 47) oder ein Führungsrohr aufweist, dessen einem Ende des Gehäuses (22) ein Handgriff (32) mit mindestens einem Betätigungsmittel für den wenigstens einen Infrarotstrahler (25, 26, 27) zugeordnet ist.

11. Verfahren zum Verbinden von Abdichtungsbahnen (13, 34, 44, 48, 49) und Abdichtungsstreifen (16, 35), wobei mindestens eine Fläche einer der Abdichtungsbahnen (13, 34, 44 ,48, 49) und/oder Abdichtungsstreifen (16, 35) durch thermisches Erhitzen wenigstens erweicht wird und durch anschließendes Zusammendrücken der mindestens einen thermisch erhitzten Fläche mit einer benachbarten Fläche thermisch verbunden werden, **dadurch gekennzeichnet, dass** mindestens eine Abdichtungsbahn (48, 49) und/oder mindestens ein Abdichtungsstreifen (16, 35) zumindest auf einer Fläche mit einer wenigstens teilweise äußeren Beschichtung (51, 52) aus einem bituminösen Material versehen ist, das im Vergleich zum bituminösen Grundmaterial der mit der Beschichtung (51, 52) versehenen Abdichtungsbahn (48, 49) und/oder des Abdichtungsstreifens (16, 35) bei geringerer Temperatur durch thermisches Erhitzen erweichbar ist und dieses bituminöse Material der Beschichtung (51, 52) durch Infrarotstrahlung hoher Energiedichte durch thermisches Erhitzen erweicht wird.

12. Verfahren nach Anspruch 11, **dadurch gekennzeichnet, dass** die Beschichtung (51, 52) der Abdichtungsbahn (13, 34, 44, 48, 49) und/oder des Abdichtungsstreifens (16, 35) gebildet wird durch eine mindestens teilweise Beschichtung (51, 52) wenigstens einer Fläche der jeweiligen Abdichtungsbahn (13, 34, 44, 48, 49) bzw. des jeweiligen Abdichtungsstreifens (16, 35) und eine sich über die vorzugsweise ganze gegenüberliegende andere Fläche der jeweiligen Abdichtungsbahn (13, 34, 44, 48, 49) und/oder Abdichtungsstreifen (16, 35) erstreckende, mindestens partielle, Beschichtung (51, 52) dieser anderen Fläche und/oder die Beschichtung (51, 52) aus einem kaltselbstklebenden bituminösen Material gebildet ist, das durch das Erweichen mit Infrarotstrahlung hoher Energiedichte aktiviert und/oder in den Klebeeigenschaften verbessert wird.

13. Verfahren nach Anspruch 11 oder 12, **dadurch gekennzeichnet, dass** das thermische Erhitzen mindestens eines Teils der Beschichtung (51, 52) oder der Beschichtung (51, 52) der thermisch zu verbindenden Abdichtungsbahnen (13, 34, 44, 48, 49) und/oder des Abdichtungsstreifen (16, 35) mit einer wenigstens einen Infrarotstrahler (25, 26. 27) zur Erzeugung von Infrarotstrahlung hoher Energiedichte aufweisenden handgeführten Heizdüse (20, 46) erfolgt, die vorzugsweise nach mindestens einem der Ansprüche 1 bis 10 ausgebildet ist.
